# EUROPEAN PATENT APPLICATION

(11) **EP 1 199 631 A2**
(43) Date of publication of application: **24.04.2002**
(21) Application number: 01122222.1
(22) Date of filing: 17.09.2001
(51) Int. Cl.: G06F 9/44

(54) **System for and method of data visualization using Internet technology**

(30) Priority: 28.09.2000 US 672214
(71) Applicant: SIEMENS AKTIENGESELLSCHAFT, 80333 München (DE)
(72) Inventor: Weinländer, Markus, 91230 Happurg (DE)

(57) **Abstract**

The disclosure describes a computer system and method for creating a computer system for displaying process data, whereby a control process responsible for monitoring data signals a Markup Language factory that data should be displayed. The Markup Language factory obtains process data and incorporates the data into a Markup Language document, which is then displayed by a browser component.

## Description

### FIELD OF THE INVENTION

The present invention relates to the production of computer software which allows the user to visualize process data. Further, the present invention relates to the production of computer software that presents data through the use of dynamically generated markup language pages.

### BACKGROUND OF THE INVENTION

The production of software often requires the integration of numerous processes and components. These processes and components handle various tasks as required. For example, a word processing program can have a process that accepts input from a user, a process (or subprocess) which displays input to a screen, a process (or subprocess) for printing to a printer, and many minor processes that execute functions selected by a user.

At present, each process and component must, at some early stage in development, be created anew by a programmer. The initial program consists of source code that is entered by the programmer. The source code is generally compiled and checked for errors. In large, complicated programs, such as a commercial word processor, code for many components, processes and subprocesses will have to be tested individually, and then gradually linked together and re-tested in steps.

Such development is time-consuming and expensive, and developers seek various ways to minimize the work necessary to produce commercial software. For example, new programming languages have gained popularity in the last decade largely because of their ability to be modularized and re-used in successive applications. Operating systems now frequently have detailed public application programming interfaces and even scripting languages, allowing developers to borrow old code rather than creating new code. In addition, new development tools have been created to help software developers maximize the modularity of these systems. Despite these improvements, however, developers are continually seeking ways to make the development of software faster, easier and more modular.

In the past decade, several document description languages have arisen to fill the need for a platform independent way for visualization programs to display documents. These languages have a variety of names, and are generally denoted as Markup Languages (MLs). Examples include HTML (Hypertext Markup Language), SGML (Standard Generalized Markup Language), SMIL (Synchronized Multimedia Integration Language), XML (eXtensible Markup Language), SVG (Scalable Vector Graphics), VRML (Virtual Reality Markup Language), XHTML (eXtensible Hypertext Markup Language), VML (Vector Markup Language), and XCML (X Card Markup Language). These languages are often interrelated, and some are in fact substitutable for others.

Among Markup Languages, HTML has become the most common. It is the standard Markup Language to describe Web documents, and can be learned quickly even by inexperienced programmers. HTML operates by placing tags into the text of a document. The tags operate to inform a document interpretation program how to display the document. For example, the set of tags (e.g., <b> </b>), placed around a word (e.g., < b > WORD < /b >) would cause WORD to be displayed in boldface type.

All Markup Languages, including HTML, require an interpreter to display a document represented in that language. The most common interpreter is called a "browser". Modern browsers, such as the Microsoft Internet Explorer™ and the Netscape Navigator™, can interpret a number of different Markup Languages, and are most typically used to request, receive and interpret documents expressed in Markup Languages over the Internet.

Markup Languages and the browsers that interpret them offer a convenient means of simplifying and modularizing the programming of visual display. Markup Language implementation has been largely unexploited however, and is currently relegated to mainly to network communications.

Thus, there is a need to decrease the time required to develop software and to increase the quality of software development on a per dollar basis. Furthermore, there is a need to simplify the task of visualization programming. Further still, there is a need to utilize Web technology, such as markup languages, in conventional software development and provide a modular method for simple visualization programming.

### SUMMARY OF THE INVENTION

An exemplary embodiment of the invention seeks to aid software development by modularizing visualization programming through the application of certain technologies developed for the World Wide Web. Numerous software packages require processes that format data to be displayed on a screen to a user. Frequently, the types of data visualization required from one software package to the next will be of similar complexity, and thus amenable to a modularizing approach.

Another exemplary embodiment seeks to use a dynamic Markup Language (ML) generator to generate a ML file, which can then be displayed by a commercially available or custom browser component or browser, incorporated into the overall software. This ML generator allows visualization programming to be completed more quickly, or, on a comparable budget basis, more effectively than conventional programming methods.

Yet another exemplary embodiment of the invention relates to a method of providing display capabilities in computer software. This method includes the steps of obtaining process data, obtaining data from a markup language fragment file, constructing at least one markup language document by combining the process data with data from the markup language fragment file, and displaying the at least one markup language document through a browser component.

Another exemplary embodiment of the invention relates to a system for providing display capabilities in computer software. This system includes any means for obtaining process data, means for obtaining data from a markup language fragment file, means for constructing at least one markup language document by combining the process data with data from the markup language fragment file, and means for displaying the at least one markup language document through a browser component.

Another exemplary embodiment of the invention relates to a system for displaying process data. This system includes a control process component that provides process data and initiates its display, a markup language factory component that receives process data and incorporates it into a markup language document, and a browser component that displays said markup language document.

Another exemplary embodiment of the invention relates to a method of creating computer software with display capabilities. This method includes the steps of placing a control process in communication with a markup language factory process, configuring the control process to communicate process data to the markup language factory process, configuring the markup language factory process to create a markup language document from said process data and at least one markup language fragment file, and placing said markup language factory process in communication with a browser component, whereby said markup language document is a communicated to and displayed by said browser component.

### BRIEF DESCRIPTION OF THE DRAWINGS

The invention is illustrated by way of example and not limitation in the figures of the accompanying drawings, in which like references indicate similar elements and in which:
FIGURE 1 is a system block diagram of an exemplary embodiment of the present invention;
FIGURE 2 is an exemplary display screen of a complete markup language document as displayed by a browser component in the system illustrated in FIGURE 1;
FIGURE 3 is an exemplary block diagram showing decision making in preparation for an exemplary ML Factory in the system illustrated in FIGURE 1;
FIGURE 4 is a block diagram showing an exemplary method for obtaining process data from a control process in the system illustrated in FIGURE 1;
FIGURE 5 is a flow diagram of an exemplary method for memory allocation and process data transfer from a control process in the system illustrated in FIGURE 1;
FIGURE 6 is a flow diagram of an exemplary algorithm for the construction of a markup language document incorporating process data in the system illustrated in FIGURE 1;
FIGURE 7 is a block and flow diagram showing an exemplary method for allowing user interactivity with a browser component and a control process through error handling in the system illustrated in FIGURE 1;
FIGURE 8 is a block diagram illustrating an embodiment of the present invention operating across a network; and
FIGURE 9 is a block diagram illustrating an embodiment of the present invention operating in conjunction with a machine tool.

### DETAILED DESCRIPTION OF EXEMPLARY EMBODIMENTS

A system for and method of data visualization using Internet technology are described. In the following description, for purposes of explanation, numerous specific details are set forth in order to provide a thorough understanding of exemplary embodiments of the invention. It will be evident, however, to one skilled in the art that the invention may be practiced without these specific details. In other instances, well-known structures and devices are shown in block diagram form in order to facilitate description of the exemplary embodiments of the invention.

In one embodiment, a computer system is used which has a processing unit that executes sequences of instructions contained in a memory. More specifically, execution of the sequences of instructions causes the processing unit to perform steps, which are described below. The instructions may be loaded into a random access memory (RAM) for execution by the processing unit from a read-only memory (ROM), a mass storage device, or some other persistent storage. In other embodiments, hardwired circuitry may be used in place of, or in combination with, software instructions to implement the present invention. Thus, the embodiments described herein are not limited to any specific combination of hardware circuitry and software, nor to any particular source for the instructions executed by the computer system.

As previously discussed, browsers are used to display documents over a network. Browser modules, or smaller program sub elements with an application programming interface (a set of objects for activating and using the browser code), are becoming available for integration into stand-alone software. Such modules allow the programmer to incorporate browser capability into a software package without reprogramming the browser itself. A stand-alone browser, a browser module, or a hybrid variation can be used with an exemplary embodiment, and are hereafter referred to collectively as "browser components" or, in the singular, a "browser component."

One embodiment of the present invention takes advantage of these browser components to simplify the task of data visualization programming. Normally, data visualization programming requires the programmer to enter instructions specifying the location of each picture element (pixel) on the screen. This manual process can be extraordinarily time consuming and not worth the effort, except in advanced graphics programs designed to display unconventional views or novel images. Instead, as described below, one exemplary embodiment of the invention uses a browser component's preprogrammed visualization code, and generates dynamic Markup Language files for display by the browser component when data visualization is required.

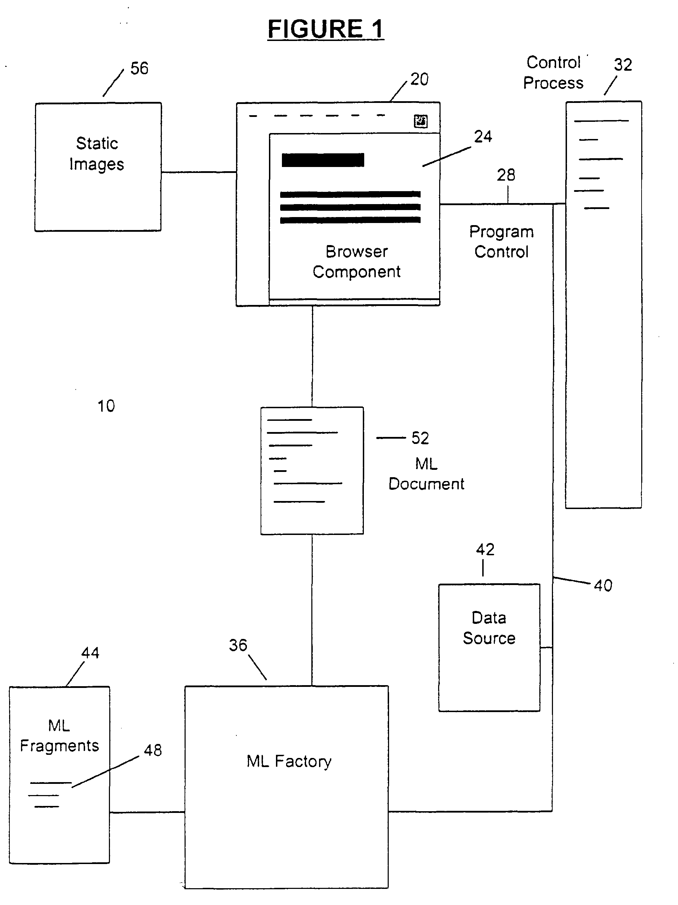

FIGURE 1 illustrates a block diagram of an exemplary embodiment of system 10 for software production. System 10 includes a control process component 32, a data source 42, a Markup Language (ML) factory 36, Markup Language (ML) fragments 44, a Markup Language (ML) document 52, and static images 56. The components of system 10 are in their most basic forms data (executable and otherwise), and may therefore reside in a single "stand-alone" system, or may be distributed to different data storing entities that are in communication with one another, as needed.

A control process component 32 can be a set of instructions to be executed by a computer or similar device. It provides the overall guidance to system 10, and can itself consist of a number of sub-processes, or may be interrelated with other processes. It may be thought of as a "top-level" program, i.e., a program that decides what other parts need to be executed to accomplish the objectives of the human user. Control process component 32 can be any process that interfaces with a data visualization process, including Markup Language factory 36. More generally control process component 32 can be a process that carries out a function for which data visualization is desired. Control processes will correspond with the overall use of the software. For example, in a machine tool control program, the control processes coordinate and direct the working of a machine. The control processes can also listen and respond to user commands, including commands for data visualization.

In an exemplary embodiment, browser component 20 includes a set of instructions to be executed by a computer or similar device. Browser component 20 can be in the form of a stand-alone application or integrated into another process.

In an exemplary embodiment, data source 42 is a file or similar data structure, containing information that is stored in a machine readable form, and need not be affixed in any particular medium (memory, hard disk, etc.), so long as it is accessible by system 10. The organization of the data source 42 depends on the particular needs of the user control process 32 and the other components of system 10.

In an exemplary embodiment, Markup Language (ML) factory 36 is a set of instructions to be executed by a computer or similar device. As a process, ML Factory 36 can be logically separate or integrated into another process, such as control process component 32. One function of ML factory 36 is to incorporate data from another process into a Markup Language document that is suitable for display.

In an exemplary embodiment, Markup Language fragments 44 are files or other suitable data structures containing pieces of complete ML documents, although fragments are typically in themselves displayable. ML fragments may be recorded in a separate files, in a continuous file, as data integrated into a process, or in any other machine readable form so long as they are accessible to the appropriate components of system 10. The number of fragments required and their organization will depend on the particular needs of the user control process 32 and the other components of system 10.

In an exemplary embodiment, Markup Language document 52 is a file containing ML that is suitable for display by a browser component 20. Suitability depends on the needs of a user and the capability of browser component 20, for example, a complete ML document (one containing a tag for the end of the document) need not be used, so long as the data is displayed in a manner consistent with the intent of the programmer of system 10. ML document 52 is usually stored as a text file, but other variations will be apprehended by those of skill in the art.

In an exemplary embodiment, static images 56 are generally image data, stored as files or in another appropriate data structure accessible by system 10. Static images 56 are suitable for display by a browser―for example, as .gif or .jpeg files. Static images 56 can, of course, contain the more complicated elements of a browser display (e.g. sound, video, etc.), and are used here only to refer to data that does not change as process data changes. Examples of data that does not change includes the border around a display, or a sound that is played when a type of process data is displayed, regardless of the value of that data.

Browser component 20 provides a display 24. Control process component 32 provides a program control signal 28 which can communicate, and is represented by a different processes or data files. When a user makes a request to review data, control process component 32 communicates an engagement signal to Markup Language factory 36 via communication link 40 (which may be as simple as an intra-process data pass). Once the request to review data is received Markup Language factory 36 constructs an Markup Language document 52 for display using data provided by control process component 32 and ML fragments 44. Markup Language factory 36 can, of course, exist as a separate process or be a sub-process of a control process 32. Control process 32 can specify which data is to be displayed and in which format. Data can either be passed with the request, or the data may be specified by a handle, and retrieved from a data source 42, which may also be stored anywhere accessible. Once Markup Language factory 36 has received a visualization command and appropriate data from control process component 32, it utilizes Markup Language fragments 44 to build a document for display by browser component 20. Markup Language fragments 44 contain fragments of ML Code 48, suitable for construction into a complete ML document 52 that meets the visualization needs of the process.

For example, if the user needs to know the present value of certain state variables presented in a n x n grid format, Markup Language documents can contain table tags instructing browser component 20 to form a table with n rows and n columns, allowing the state variables to be inserted in the appropriate table elements by a Markup Language factory 36. Markup Language factory 36 can then use each necessary Markup Language fragment 44, combined with necessary data provided by program control 28 or data source 42 to construct a Markup Language document 52. A complete Markup Language document 52 is suitable for display by the browser component 20. A Markup Language document 52 is then transferred to browser component 20.

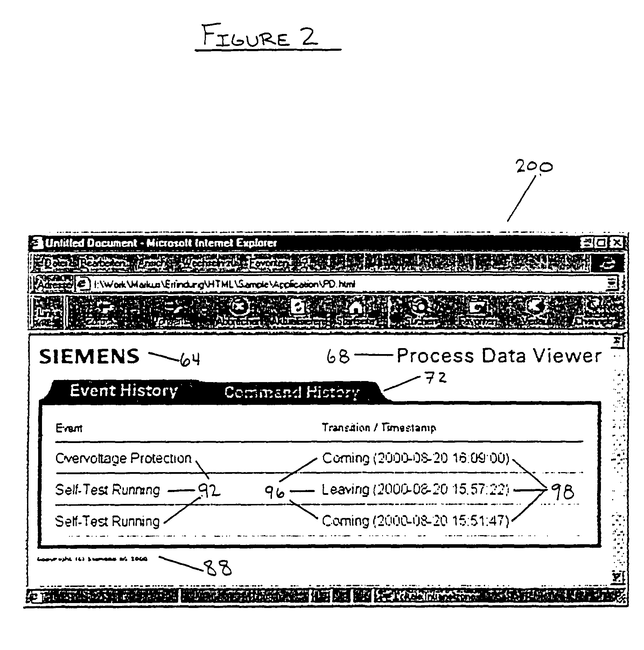

In an exemplary embodiment, Markup Language document 52 includes references to images or other objects within the document. For example, if HTML is used and data visualization requires a title or logo, an image can be referenced as a graphic object using an HTML <img> tag, or suitable tag in another language. The tag can also contain a reference to a file name for the source of the image, for example <img src="empty.gif" >. Upon the interpretation of such a tag, browser component 20 can automatically request that an appropriate image file be supplied to it from the operating system or control process 32. Image data can then be transferred from static image files 56 to the browser component 20. To save time, a browser component 20 may also be instructed to request appropriate image data early on by a control process 32 or a Markup Language factory 36, so that browser component 20 can retrieve image data while a Markup Language factory 36 is constructing a Markup Language document 52. FIGURE 2 illustrates an exemplary screen display 200 of a displayed document.

In the exemplary embodiment, both Markup Language Fragments 44 and static image files 56 are accessible to a Markup Language factory 36 and a browser component 20. Whether files exist separately, are concatenated into a single file, or even integrated into the Markup Language factory 36 or control process 32 itself, matters little so long as the necessary program elements are able to access them. The programmer can consider whether the easy programmer access and modularity provided by separate files is more valuable than the protection against user corruption afforded by the incorporation of all files within the program code, or as a single, but separate data file.

The following example, in reference to FIGURES 2 through 8 and the APPENDED CODE, shows the operation of Markup Language factory 36 of an exemplary embodiment. In this example, the user has requested to view the events that have taken place within control process component 32 since its start. Here, a control process component 32 is software driving the operation of machinery.

FIGURE 2 illustrates an exemplary screen display 200 of a displayed document generated from a markup language document. The displayed markup language document shows the history of an operating process. There are several elements in the page, each of which are positioned according to an underlying Markup Language code. For an example of such code, see TABLE 7. The displayed document contains a number of static images, including a "Logo" image 64, a "Title" image 68, a "Tab" image 72, "Blue" images (not shown), "Grey" images (not shown), "Empty" images (not shown) and a "Copyright" image 88.

The displayed document also contains a number of dynamically generated elements, including Event Names 92, Event Transition States 96, and Process Time Stamps 98. These elements correspond to the data from control process 32 or data source 42 that is provided to Markup Language factory 36.

An exemplary pseudocode algorithm for Markup Language Factory 36 is shown in TABLE 1. An exemplary embodiment of the computer code used in system 10 is included as APPENDED CODE in a software appendix to this written description. The APPENDED CODE contains a number of parts. First, the APPENDED CODE contains a simulated Control Process, entitled "Control Process." The Control Process in the APPENDED CODE serves only to generate and communicate data, but most real control processes can serve some other function that generates data. Second, the APPENDED CODE contains a main Markup Language Factory function, entitled "HTML Factory Main() Function." This function calls a CreateHTML function, which in turn calls GetProcessData (located in the APPENDED CODE within "Control Process"), CopyFile and AppendToFile functions. The description in the FIGURES and TABLES parallels the logical flow of the APPENDED CODE.

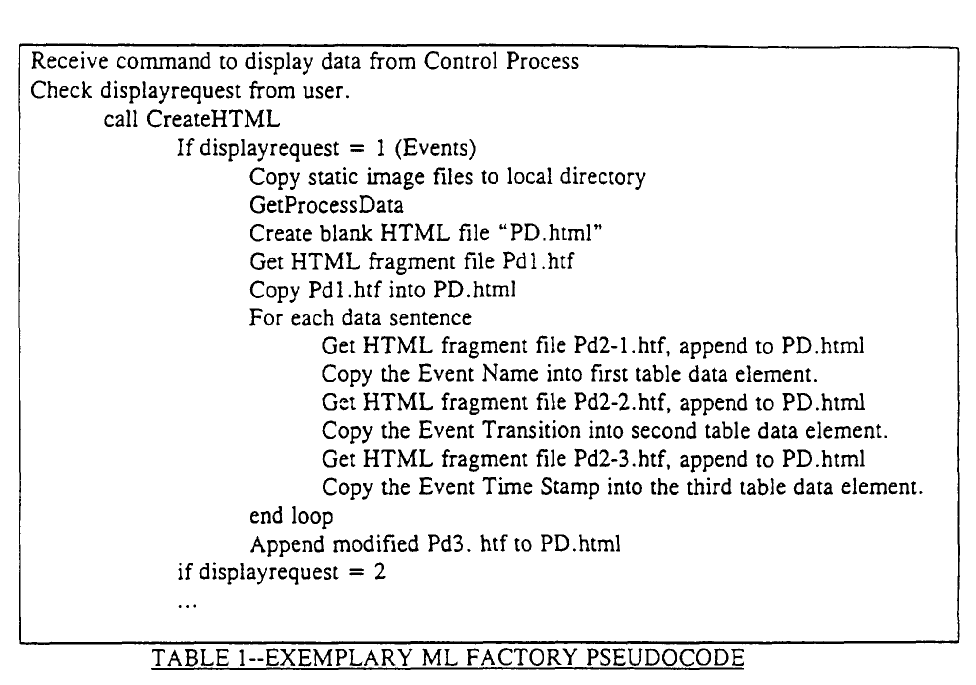

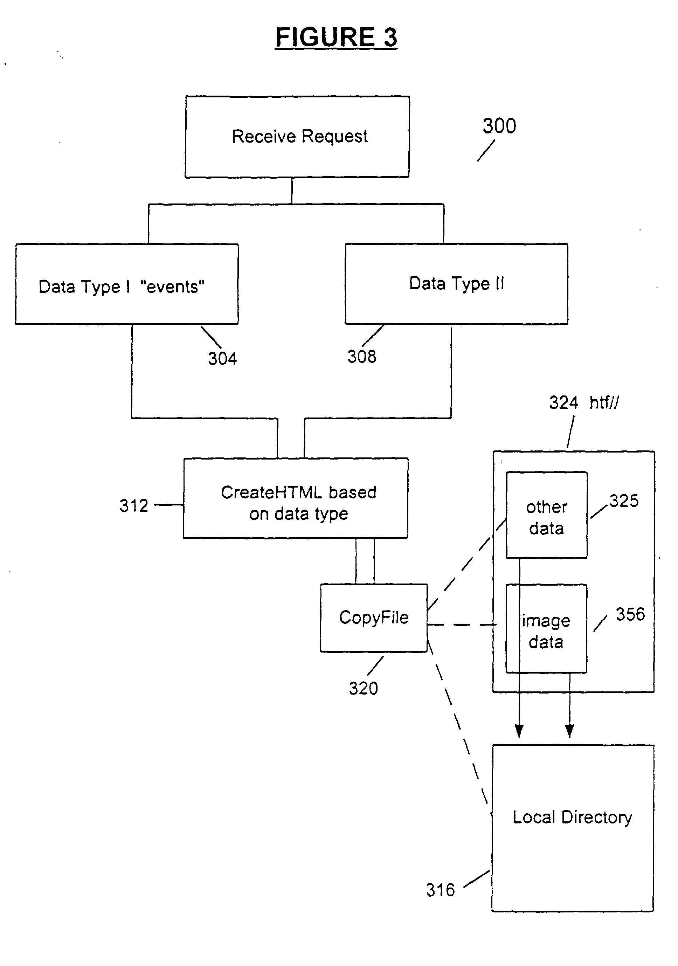

Because HTML is used for this example, Markup Language Factory 36 is hereafter referred to as HTML Factory 36. FIGURE 3 is a flow diagram 300 illustrating the decision making of HTML factory 36. The boxes in flow diagram 300 represent steps in the decision-making process, or, in the case of boxes 324, 320, 356 and 316, files or directories. Box 304 and 308 represent a decision-making tree, which can be composed of if/then statements, switch/case statements, or the like. Box 312 represents a function, process or component, which is a set of instructions executable by a computer or similar device. Box 312 includes the CreateHTML function, which is responsible in an exemplary embodiment for the production of an HTML document. Box 320 represents a CopyFile function, which also consists of executable instructions. The CopyFile function is responsible for moving files from their normal storage spaces to a local, usable directory. Boxes 324 and 316 represent the "normal" and "local" directories respectively, while boxes 325 and 356 represent files to be moved.

Referring now to FIGURE 3, HTML Factory 36 first receives a request from control process component 32 at box 302. HTML Factory 36 determines the format of the document to be displayed. The information required to make this decision stems from a command issued by a human user and can be conveyed from control process component 32 as part of the transferred data itself, or, for example, as a change in an object parameter. The decision regarding the type of visualization is made by the process (for example, with a switch/case statement) in boxes 304 and 308, which then allow the process to proceed with proceed with either Data Type I or Data Type II. In this way, different visualization formats for different data types may be selected.

After HTML Factory 36 has been instructed with a particular display option, it then passes this information to box 312 in which the CreateHTML function performs the work of generating a suitable HTML file 52 (not shown). CreateHTML function readies a local directory 316, by copying static image files 356 and other necessary data 320 into local directory 316, or another directory expected by the browser component.

In this example, the files are copied via the CopyFile function in box 320 from the "htf\\" directory in box 324 to the local directory 316. The CopyFile function receives a filename character string (array) as a parameter, creates a local and a "htf\\" file name based on the filename parameter, creates a local file based on the file name parameter, and then appends the information from the "htf\\" file to the local file of the same name. For example, a call to CopyFile with "blue.gif" as a parameter will create the file "Blue.gif" in local directory 316, and then copy the contents of Blue.gif from the "htf\\" directory in box 324 into the newly created local Blue.gif file. The copying process allows separate directories to be used and retains modularity, but of course the files can be placed in any accessible location.

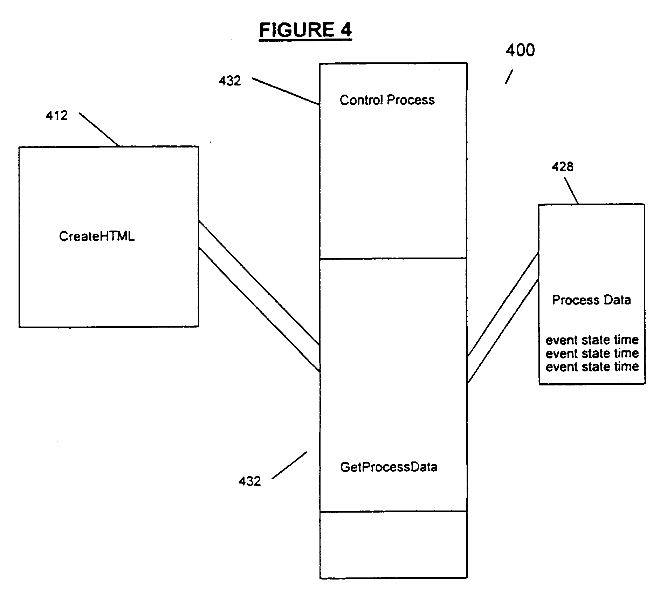

FIGURE 4 illustrates a flow chart 400 of a method for interprocess data communication, or a way of getting the process data to be visualized to the HTML factory for incorporation into an HTML document. The boxes in FIGURE 4 represent either executable instructions or non-executable data, and the lines between boxes represent communication. Box 412 represents CreateHTML function described with reference to FIGURE 3. Box 432 includes a control process, and box 436 includes a GetProcessData function, here shown as a subprocess of a control process of box 432, existing within a control process component 32 (FIGURE 1). Box 428 includes process data that must be accessed by CreateHTML function of box 412.

The CreateHTML function of HTML Factory 36 (box 412), seeks the process data in box 428 to be visualized from control process component 32. Because the process data retains the possibility of changing (hence the need to visualize it), the CreateHTML function needs generally to access data from an updated source. In this example, this is accomplished as a function call to the external GetProcessData function 132, which returns an integer that reflects the number of events available and a pointer to memory where the process data may be accessed. In the APPENDED CODE, the control process component 32 exists only to show how data can be passed to HTML Factory 36, and thus, for purposes of simplification, control process component 36 consists of nothing more than variable and constant definitions and a GetProcessData function. It is normally in a control process where the main function of the program would be executed, for example, for the monitoring and control of an industrial machine tool.

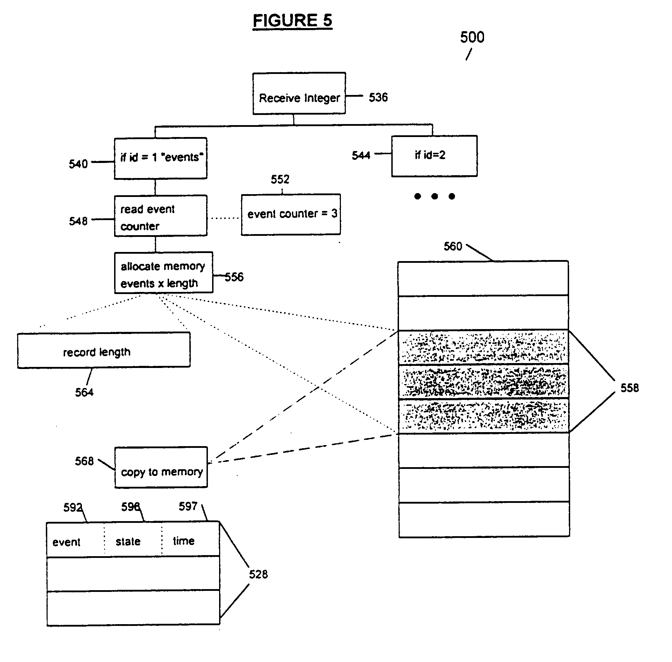

The workings of an exemplary GetProcessData function in box 436 are further described with reference to FIGURE 5. FIGURE 5 illustrates a flow diagram 500 of exemplary steps in process that passes data from a control process component to a ML factory component. In FIGURE 5, boxes 536, 540, 544, 548, 556 and 568 represent steps executed by a GetProcessData function. Boxes 552, 560, 564, 528 and 592, 596, and 597 represent data stored in memory. Box 560 is a representation of all available memory, broken into allocatable blocks, three of which have been allocated as shown by shaded boxes 558. Box 564 is a memory segment indicating the memory requirements of the data structure holding an "event" record, which consists in the present example of three parts: event name 592, event state 596 and event time 597. Box 528 is a representation of memory (unrelated to memory 160) used to actually store process data that must be accessed.

As illustrated by FIGURE 5, at box 536, a GetProcessData function can receive an integer as a parameter, specifying which process data the user has requested. At boxes 540 and 544, GetProcessData function then decides (using, for example, a switch/case statement), which data to return. If the user has selected "events", thus leading to box 540, GetProcessData function establishes the number of events at box 548 by checking any process variable at box 552 designed to keep track of the number of events. The function at box 556 then allocates sufficient memory 558 from available memory 560 based on the number of records times the memory requirement of the basic data structure 564 and copies the process data records into the allocated block of memory 558 at box 568. A pointer can be passed as a variable parameter to keep track of the allocated memory 558, and the size of allocated memory 558 is externally determinable from the return integer (the event counter) and the size of the basic data structure. In this example, three character strings are copied to memory for each record, one reflecting event name 592, one reflecting the event state 596, and one reflecting the event time stamp 597.

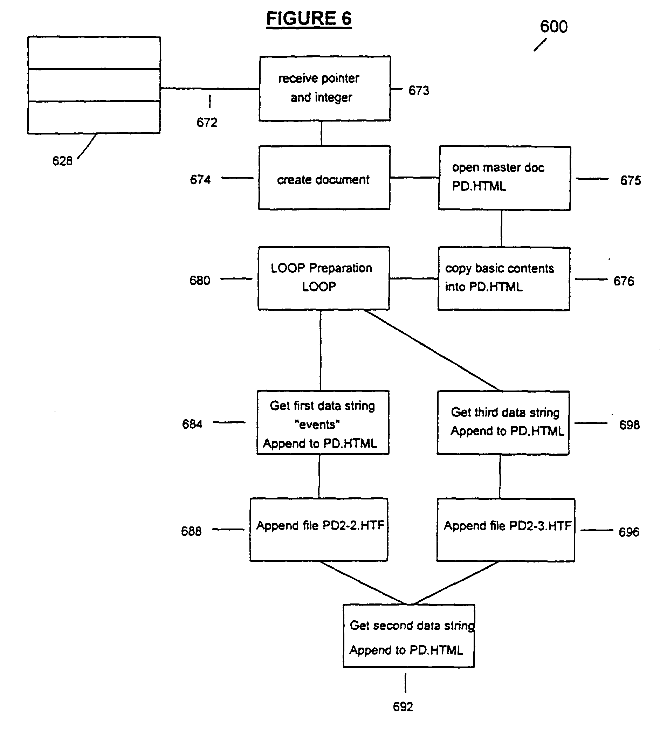

Once the process data has been made accessible to the CreateHTML function, the CreateHTML can accomplish its goal as illustrated by FIGURE 6. FIGURE 6 illustrates a flow diagram 600 of the steps executed by the CreateHTML function. Box 628 represents process data stored in memory and used by CreateHTML function, and line 672 represents a pointer to that memory. Boxes 672-697 represent steps executed by CreateHTML function.

When the GetProcessData function (not shown) returns, the CreateHTML function has access to the process data in box 628 through a pointer to memory shown by line 672 and the number of records through the returned integer (not shown). At step 675, the CreateHTML function begins the construction of the ML Document 52 (not shown) by first opening a master HTML document ("PD.html"). The necessary initial HTML, containing the file header and basic page layout, is contained in HTML Fragment "pdl.htf" shown in TABLE 2. At box 676, file "pd1.htf" is appended to the (heretofore empty) "PD.html" file, giving that file its initial contents. The PD.html file now terminates in the middle of a table tag, which must be completed for the table to display as desired.

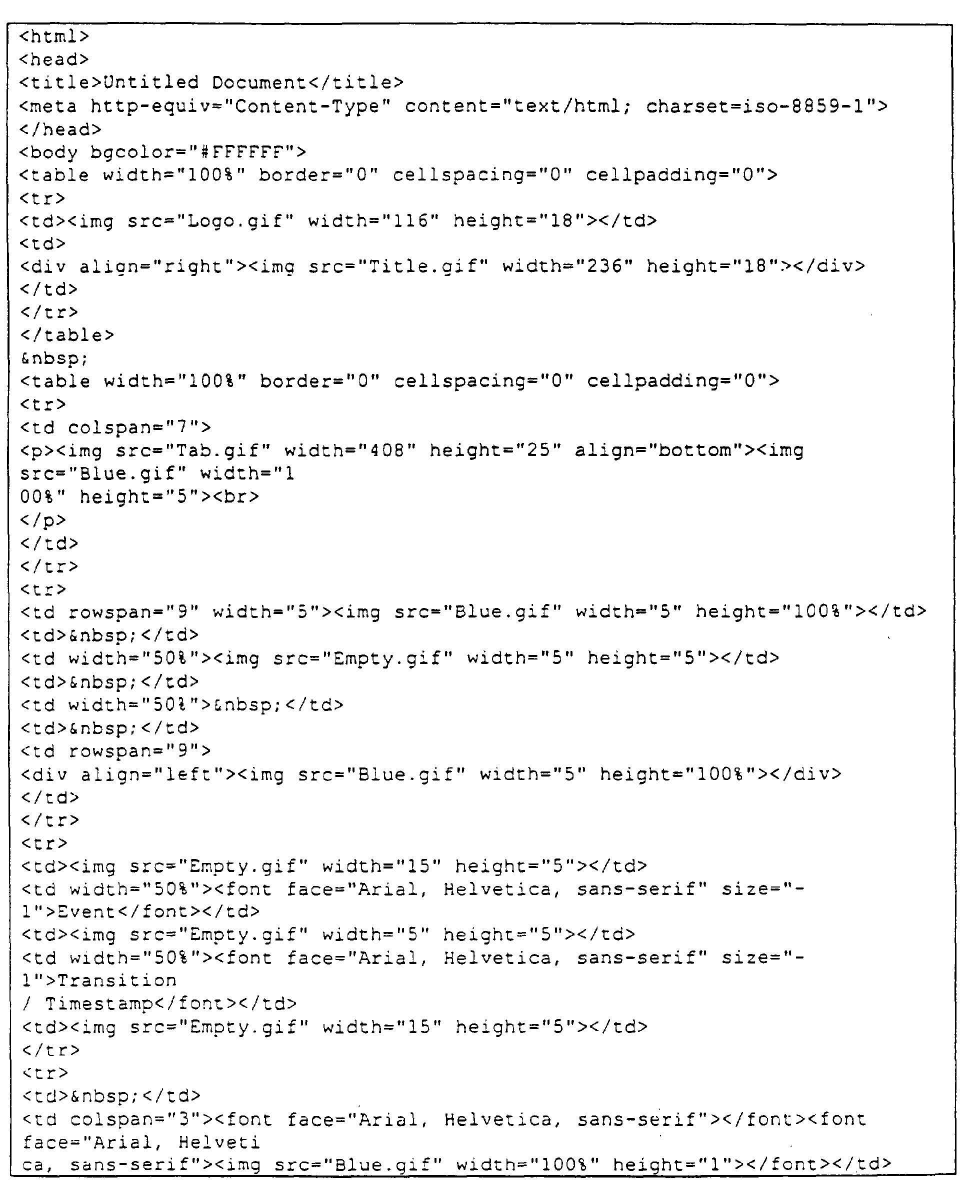

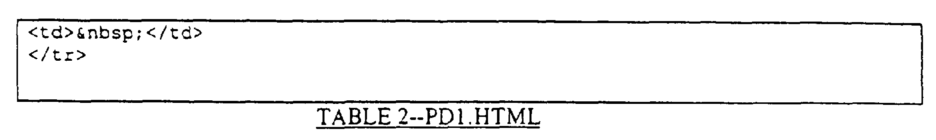

At box 680, the CreateHTML function appends HTML that establishes an HTML table row and data element suitable for displaying the first part of the process data 128 by appending HTML Fragment "pd2-1.htf" (TABLE 3) to "PD.html". CreateHTML then enters a loop beginning at box 680. At box 684, the first part of process data 152 is appended to the file character-wise by indexing pointer 672. Next, at box 688, HTML Fragment "pd2-2.htf" (TABLE 4) is appended to "PD.html", establishing a suitable table data element for the display of the second record element "event transition state" 92 (not shown), which is then, at box 692, appended to "PD.html" in like fashion. At box 696, the third record element, event time stamp, is also preceded by a Fragment "pd2-3.htf" (TABLE 5), and at box 697 is appended to PD.HTML. The loop then executes once for each record.

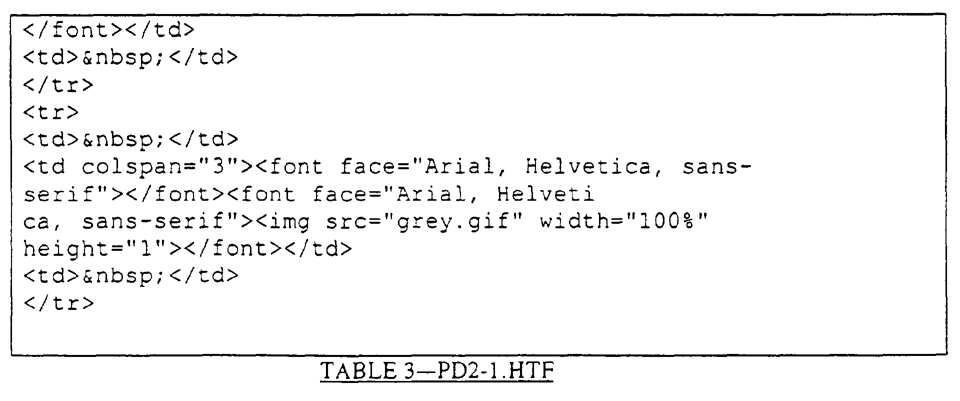

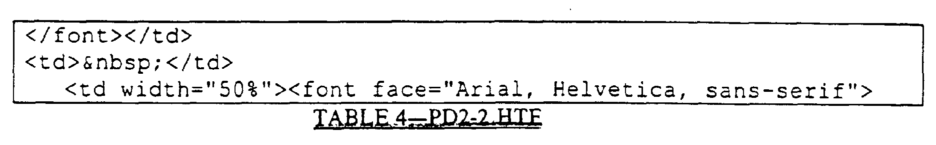

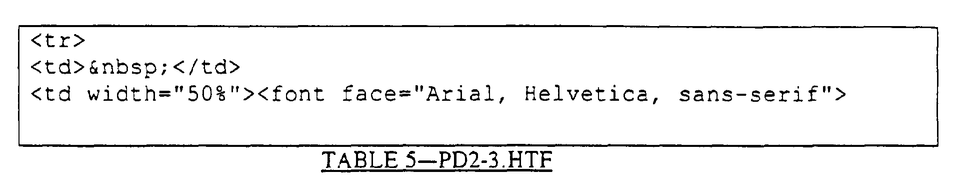

When the loop is finished executing, the process data in box 628 will be copied to within a properly formatted HTML table, which needs only an end tag to be complete. This is accomplished by appending a table-cap HTML Fragment, ("pd3.htf") (TABLE 6) to ("PD.html"). The table-cap file properly ends the table tag and HTML Document 52, which is shown in finished form in TABLE 7. It also contains code for formatting the bottom of the document, including the copyright statement. The completed HTML document 52 is then sent to the browser component 20 for display, as shown in FIGURES 1 and 2.

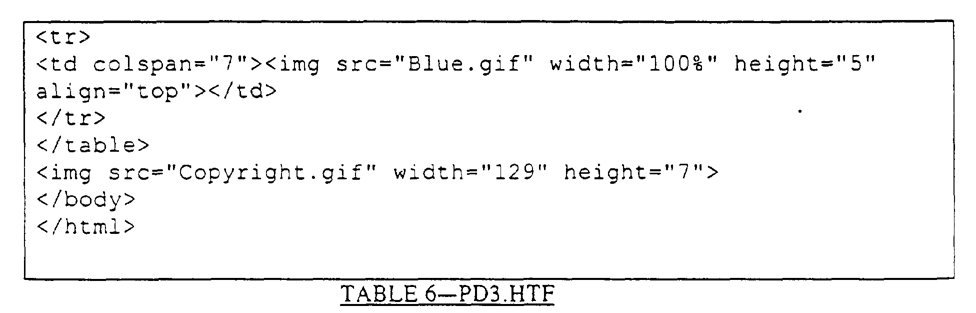

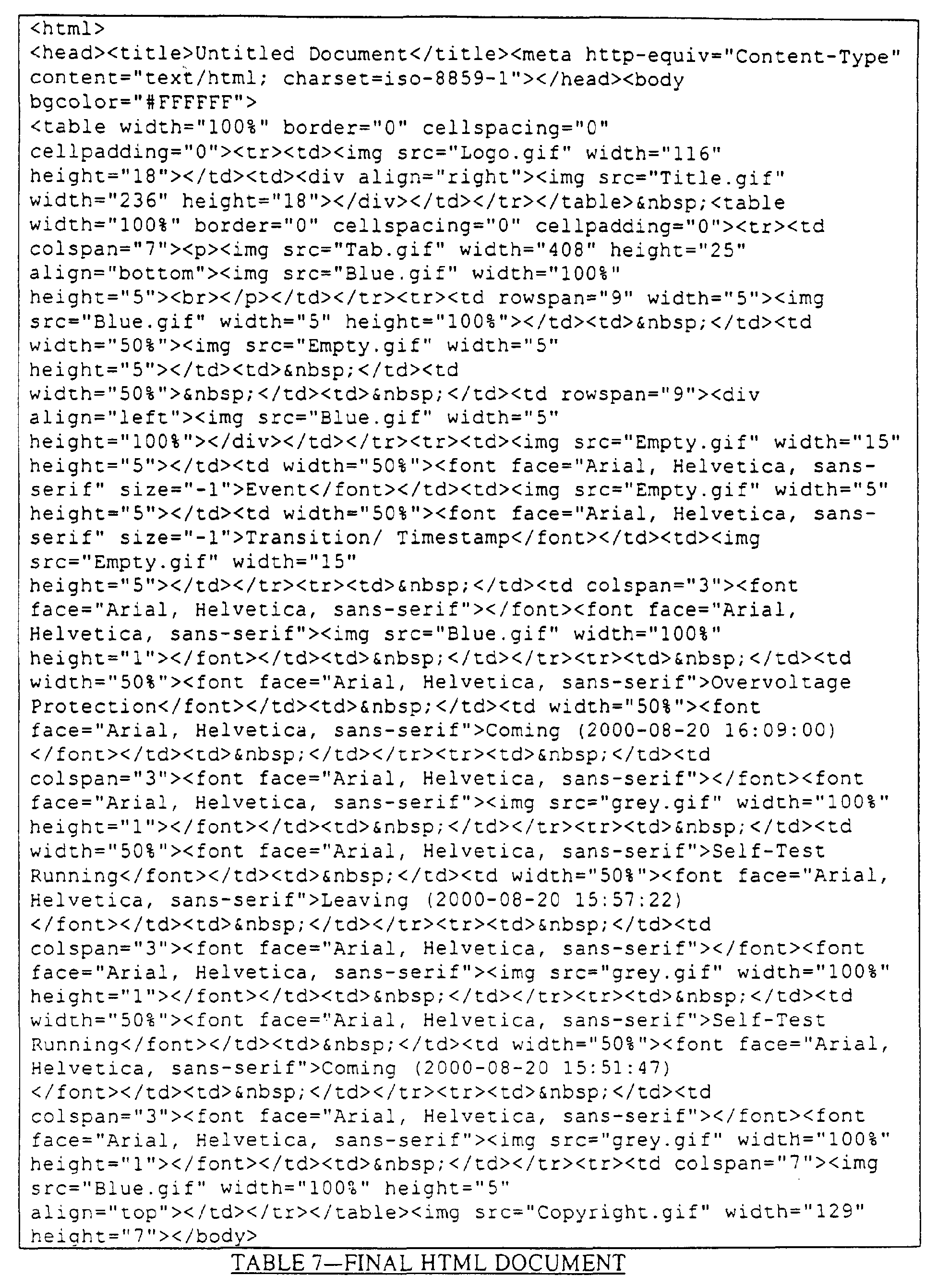

With reference to FIGURE 1, static HTML Fragments 44 may be created manually, or by any number of Web-Authoring tools commercially available. The layout of individual items can be pre-determined using dummy data, and the dummy data subsequently removed to create fillable HTML Fragments.

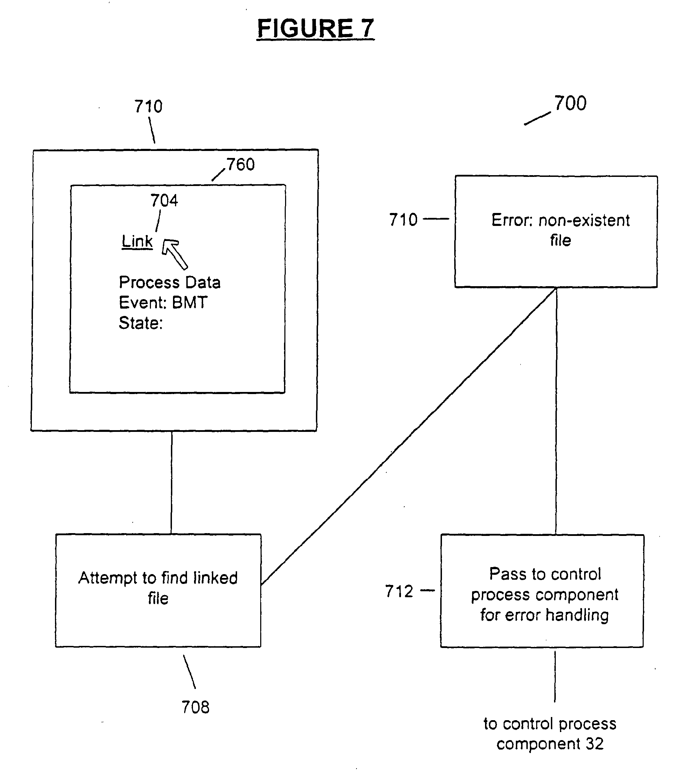

Other embodiments of the present invention exist, and a few instances are noted. One such instance is illustrated by FIGURE 7, which is a block simple flow diagram 700 illustrating a method to provide user interactivity with browser component 20. Box 720 represents a browser component (displaying document 760 with a link 704), from whence a request is issued. Boxes 708-712 represent steps executed in the attempt to handle this request. The request generates an error, and that error may be interpreted by a control process 32.

An integrated browser component 20 may be given enhanced functionality through the use of error handling. A link 704 may be added to the ML document 60, wherein the link references a non-existent file (not shown). If the user activates the link in the normal way, by clicking over the link with the mouse, the browser component 20 will attempt to find the non-existent file and fail, as in step 708. At step 712, the browser component 20 will return control over to the Control Process 32, along with an error message. Control Process 32 will then be expected to handle the error, but instead may treat the error as a user request, for example, to examine more data.

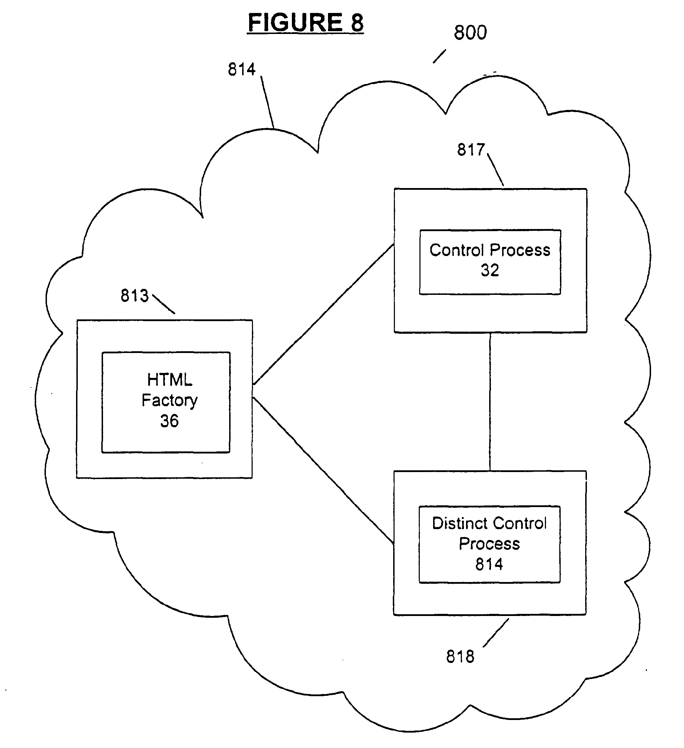

FIGURE 8 serves to illustrate yet another embodiment of system 10. FIGURE 8 is a simple network diagram, where the boxes represent nodes on a network 814, and boxes within boxes represent processes operating on those nodes. The embodiment shown in FIGURE 8 allows HTML factory 36 to reside at a node 813 on network 814 separate from control process 32 (at node 817), distinct control process 815. Markup Language factory 36 could then serve multiple nodes 817 and 818, and be easily updated. Such a configuration advantageously saves users the trouble of updating their applications when new versions were produced―the Markup Language factory would automatically generate the latest visualization pages based on changes made at the remote node 813.

Advantageously, system 10 can be used in conjunction with a machine as shown in FIGURE 9, which is a block diagram 900 showing different components of such a system 10. Block 916 represents a machine tool―for example, a machine that automatically solders electrical components according to a preprogrammed pattern. Block 952 represents particular process data for the machine tool, for example, the number of solder joints it has completed. Lines 920 represent a communication link between machine tool 916 and a control process 32, which controls machine tool 916.

In the embodiment of FIGURE 9, the machine of box 916 is connected via communication link 920 to the Control Process 32. Communication link 920 can be as simple as a standard wire for transmitting voltage changes, or as complex as a full integration of the control process 32 and the circuitry upon which it runs within the machine of box 916. The machine produces process data 152, which must be observed by a user. Control process 32 and its associated subprocesses allow a user to direct and monitor the actions of the machine of box 916. System 10 can thus be linked to the machine via communications link 920, such that a control process 32 has access to process data 952, and is able to use an earlier described embodiment to display process data 952 produced by machine 916. In machine control systems, there is often little need for extensive graphics programming, as the output data is uncomplicated and foreseeable. That is, there is generally little need for complex three dimensional rendering or other computationally intensive data visualization. Here, the embodiments of the invention should permit such machines to be manufactured or upgraded at lower cost with comparable quality to present methods.

While the embodiments illustrated in the FIGURES and described above are presently preferred, it should be understood that these embodiments are offered by way of example only. The invention is not limited to a particular embodiment, but extends to various modifications, combinations, and permutations that fall within the scope and spirit of the appended claims.

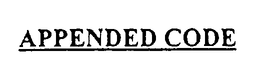

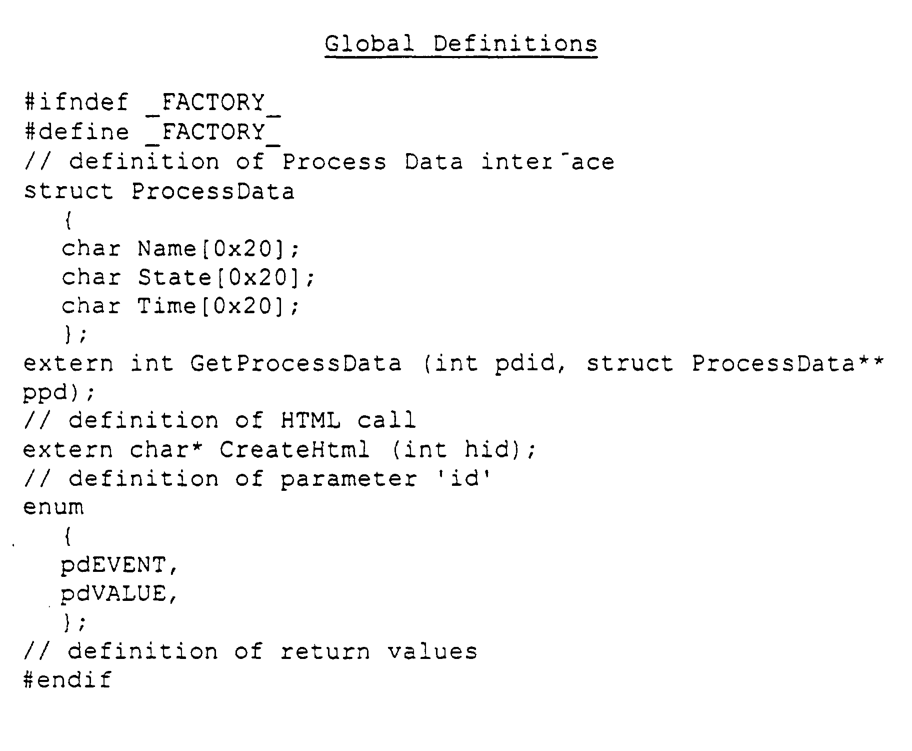

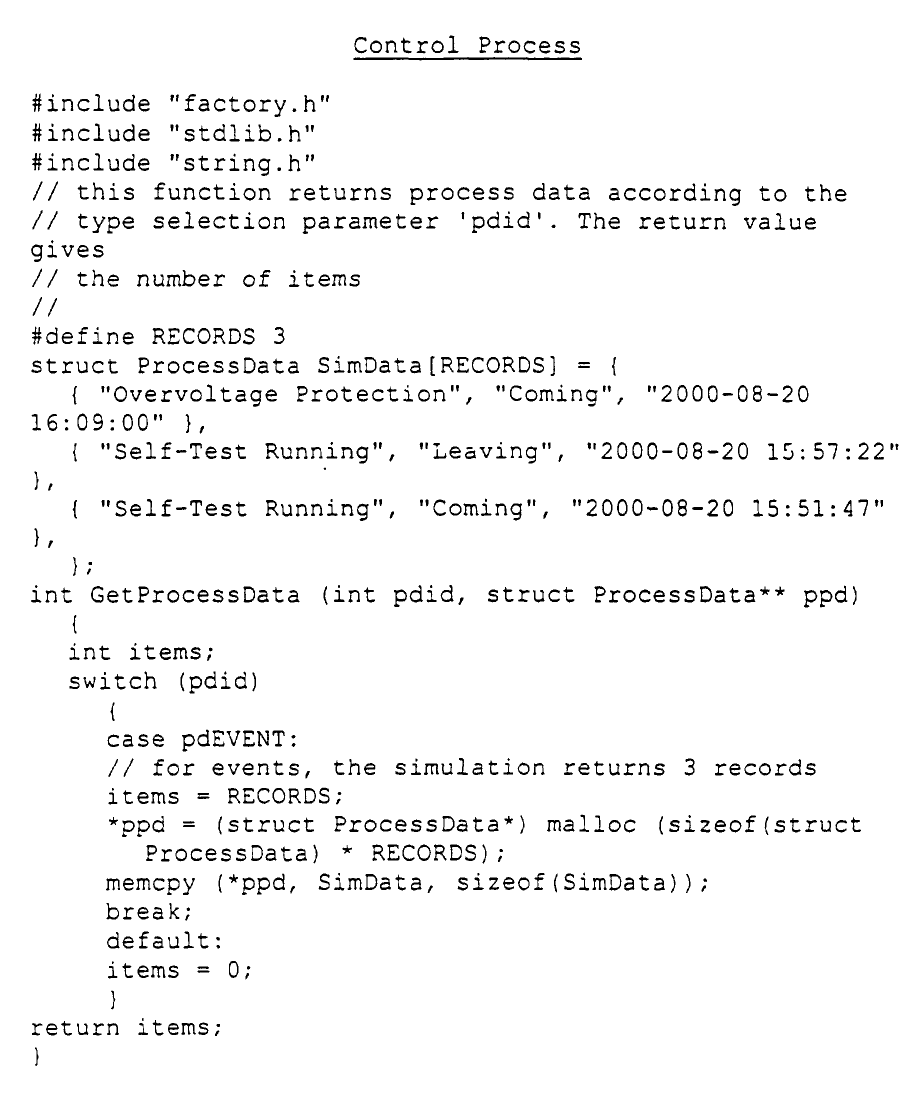

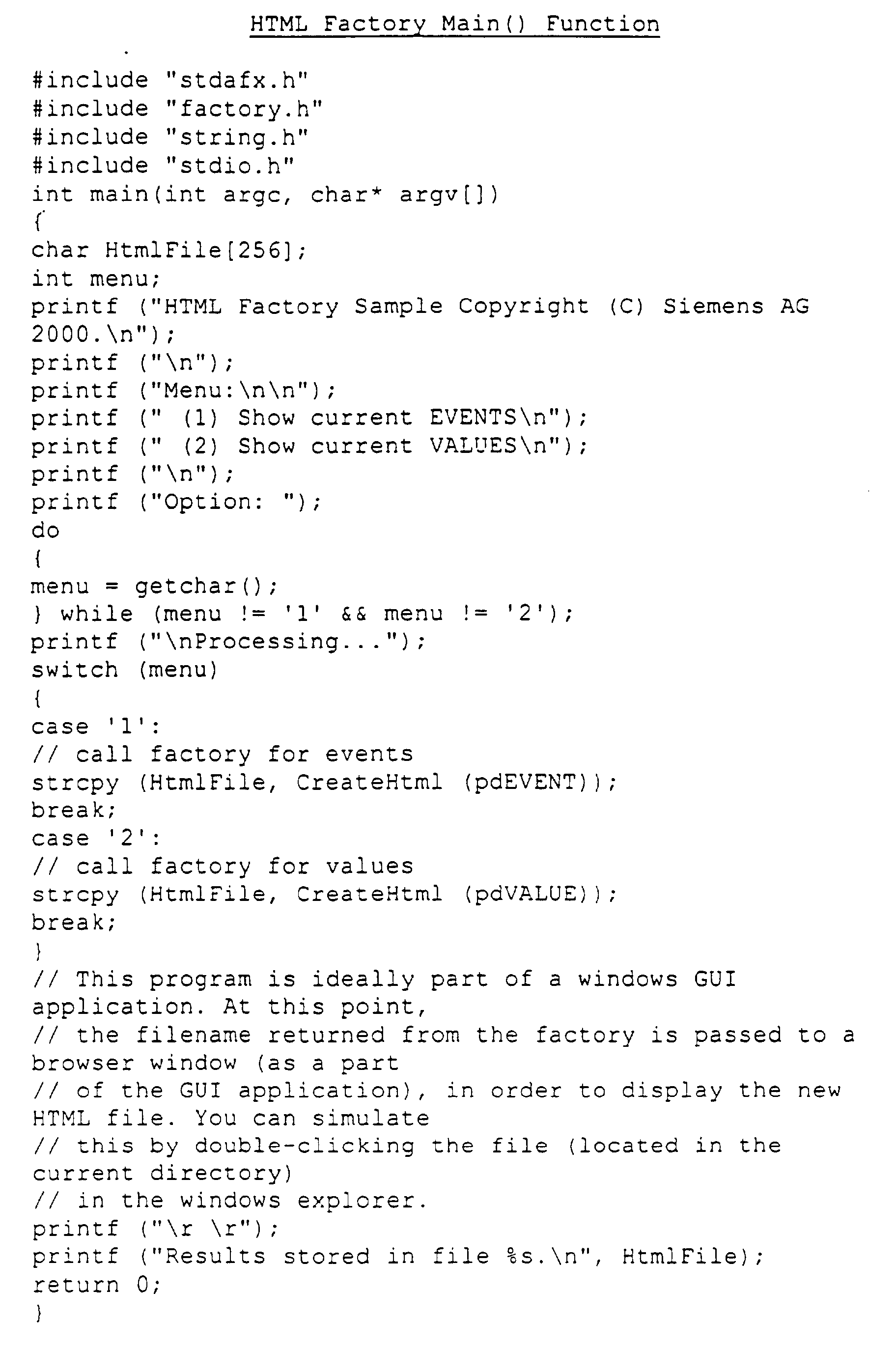

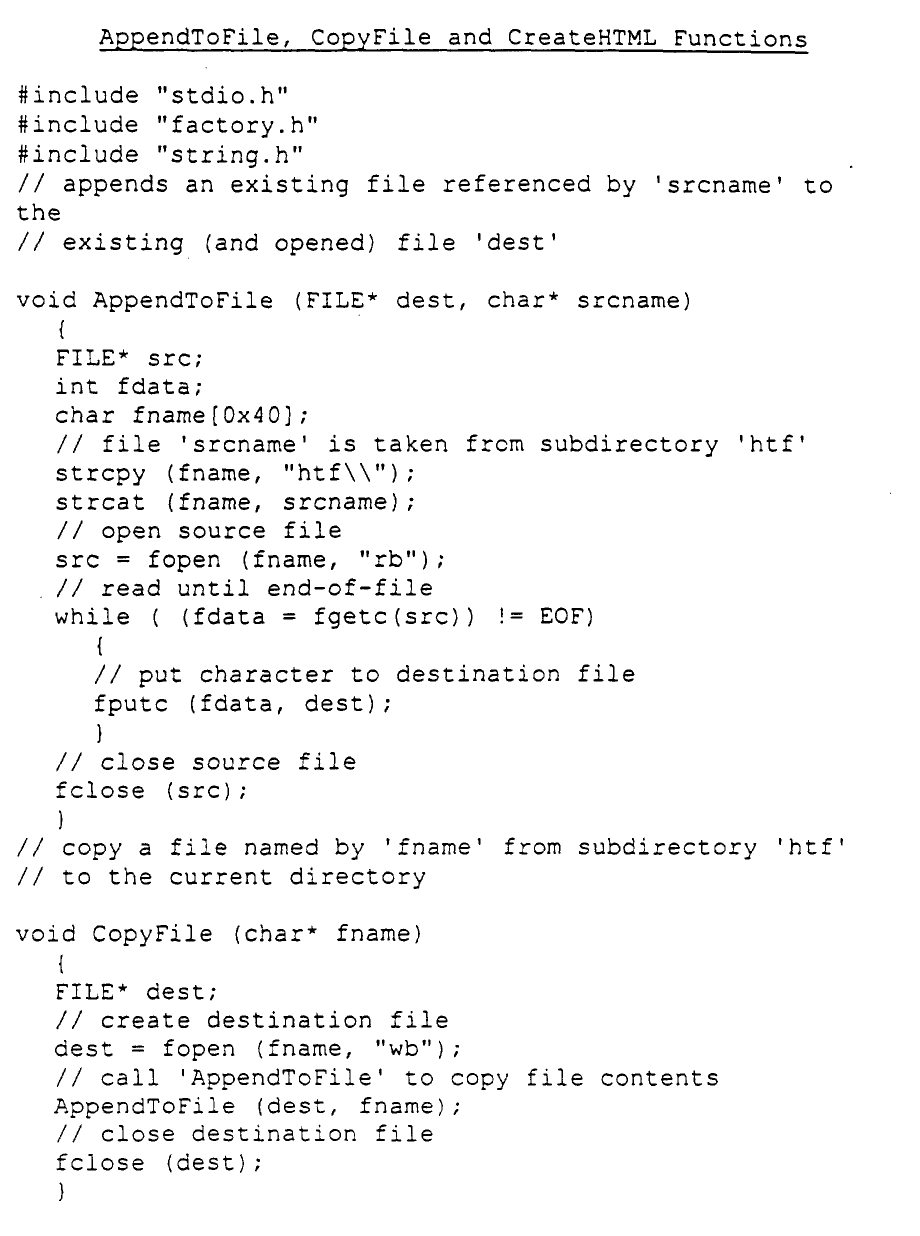

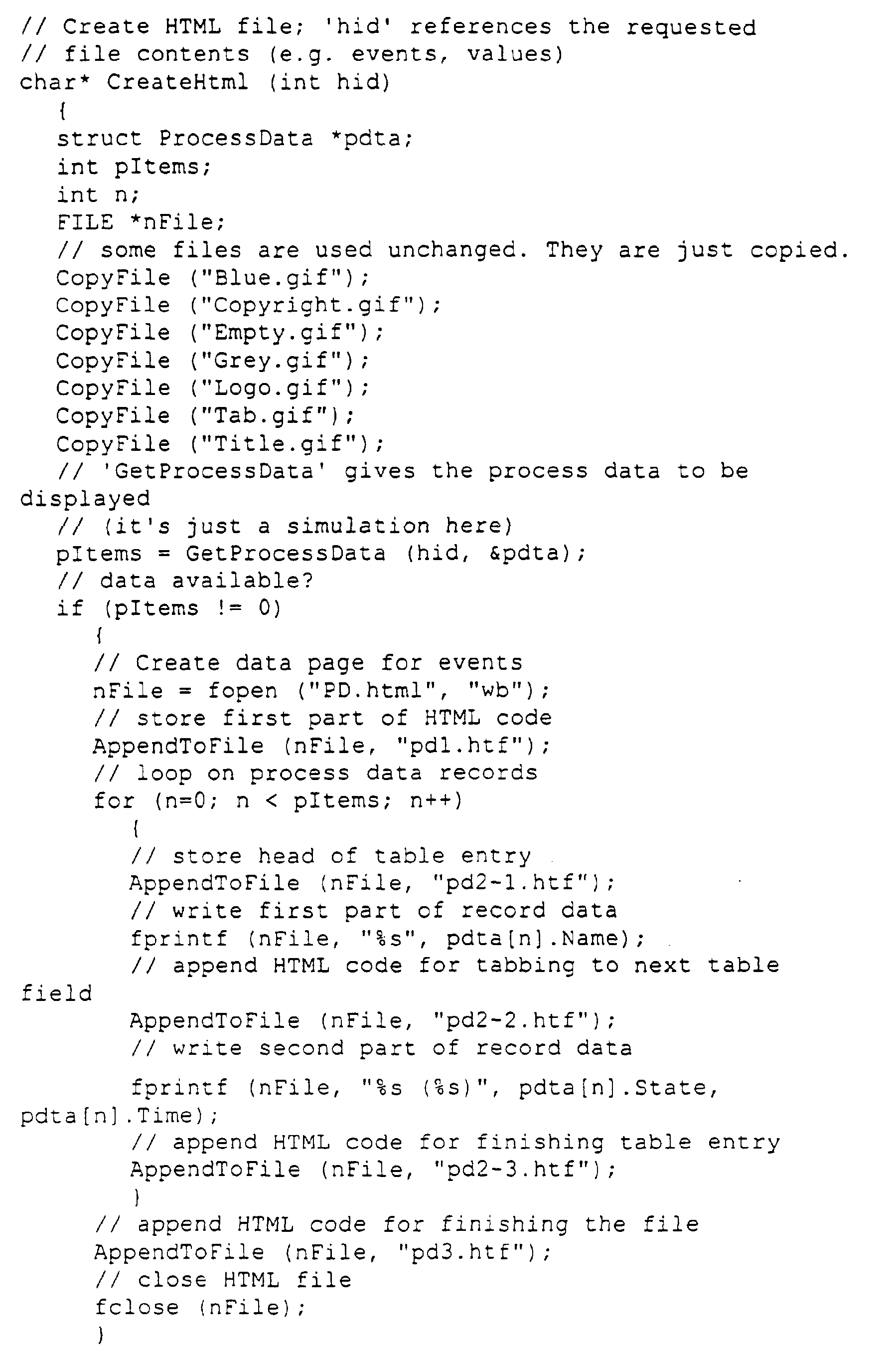

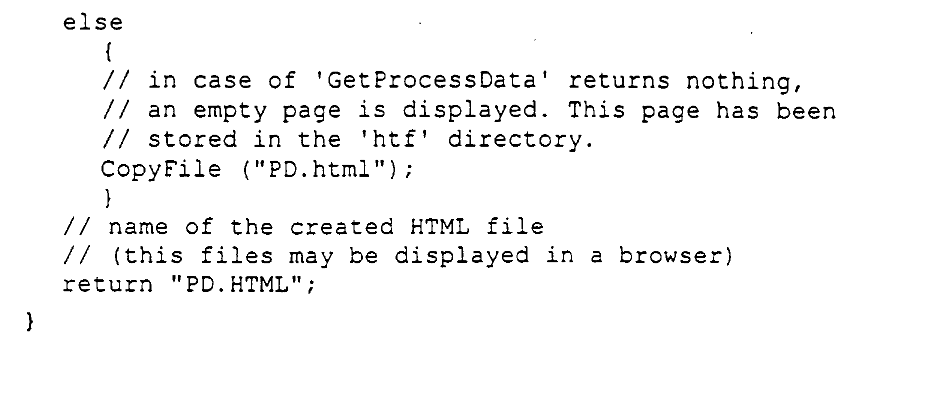

## Claims

1. A method of providing display capabilities in computer software, comprising:
obtaining process data;
obtaining data from a markup language fragment file;
constructing at least one markup language document by combining the process data with data from the markup language fragment file; and
displaying the at least one markup language document through a browser component.

2. The method of claim 1, wherein the step of obtaining process data includes obtaining said process data from a control process.

3. The method of claim 2, wherein the step of obtaining said process data further comprises obtaining said process data from a machine controlled by said control process.

4. The method of claim 1, wherein the step of obtaining data from a markup language file comprises obtaining data from a directory which holds at least two markup language files as separate files.

5. The method of claim 1, wherein the step of obtaining data from a markup language file comprises obtaining multiple markup language fragments from a single data structure.

6. The method of claim 1, wherein the step of constructing at least one markup language document includes appending some of said process data to the end of a Markup Language fragment file.

7. The method of claim 1, wherein the step of displaying the at least one markup language document through a browser component further comprises displaying said document in a browser module integrated into a process.

8. The method of claim 1, further comprising configuring said browser component to pass link error messages to a control process.

9. A system for providing display capabilities in computer software, comprising:
means for obtaining process data;
means for obtaining data from a markup language fragment file;
means for constructing at least one markup language document by combining the process data with data from the markup language fragment file; and
means for displaying the at least one markup language document through a browser component.

10. The system of claim 9, further comprising means for the control of a machine.

11. The system of claim 9 further comprising means for providing user interactivity with a browser component.

12. The system of claim 9 further comprising means for selecting among different visualization formats.

13. A system for displaying process data, comprising:
a control process component that provides process data and initiates its display;
a markup language factory component that receives process data and incorporates it into a markup language document; and
a browser component that displays said markup language document.

14. The system of claim 13 wherein said control process component communicates with a machine.

15. The system of claim 13 wherein said browser component is a browser module integrated into a process.

16. The system of claim 13 wherein said markup language factory component comprises a process that makes a decision about display format based on information received from a control process.

17. The system of claim 13, wherein said control process, said markup language factory, and said browser module form components of a stand-alone software system.

18. A method of creating computer software with display capabilities, comprising:
placing a control process in communication with a markup language factory process;
configuring the control process to communicate process data to the markup language factory process;
configuring the markup language factory process to create a markup language document from said process data and at least one markup language fragment file; and
placing said markup language factory process in communication with a browser component whereby said markup language document is communicated to and displayed by said browser component.

19. The method of claim 18, further comprising configuring the control process to operate a machine.

20. The method of claim 18, further comprising placing said markup language factory process at a separate node on a network from said control process.

21. The method of claim 20, further comprising configuring the markup language factory process to respond to data visualization commands comprising process data from a remote network node by communicating a dynamically generate markup language document.

22. The method of claim 21 further comprising configuring the markup language factory process to respond to visualization commands from more than one remote network node.
